# FASCICULE DE BREVET EUROPEEN

(11) **EP 3 246 846 B1**
(45) Date de publication et mention de la délivrance du brevet: **18.09.2019**
(21) Numéro de dépôt: 17290079.7
(22) Date de dépôt: 19.06.2017
(51) Int. Cl.: G06K 7/10

(54) **SYSTÈME DE COMMUNICATION, SYSTÈME DE FOURNITURE DE SERVICE COMPRENANT UN TEL SYSTÈME DE COMMUNICATION, ET PROCÉDÉ ASSOCIÉ**
KOMMUNIKATIONSSYSTEM, LEISTUNGSVERSORGUNGSSYSTEM, DAS EIN SOLCHES KOMMUNIKATIONSSYSTEM UMFASST, UND ENTSPRECHENDES VERFAHREN
COMMUNICATION SYSTEM, SERVICE-PROVISION SYSTEM COMPRISING SUCH A COMMUNICATION SYSTEM, AND ASSOCIATED METHOD

(43) Date de publication de la demande: 22.11.2017
(73) Titulaire: Revenue Collection Systems France SAS, 91220 Plessis-Pâté (FR)
(72) Inventeur: Langle, Pierre, 91229 Bretigny-SUR-Orge (FR); FIX, Franck, 91229 Bretigny-SUR-Orge (FR); Gitton, Jean-Pierre, 91229 Bretigny-SUR-Orge (FR); Lambin, Xavier, 91229 Bretigny-SUR-Orge (FR)
(74) Mandataire: Lavoix

(56) Documents cités:
- EP-A1- 1 605 391
- US-A1- 2007 229 275

## Description

La présente invention concerne un système de communication avec au moins un média sans contact, le système de communication étant du type comprenant un premier dispositif de communication adapté pour lire des données sur un premier média sans contact et un deuxième dispositif de communication adapté pour lire des données sur un deuxième média sans contact,

L'invention concerne également un système de fourniture de service comprenant un tel système de communication, et un procédé de communication associé.

Le document US 2007/0229275 décrit un procédé et un système pour un basculement d'antenne dans un système RFID.

Le document EP 1 605 391 décrit un ensemble d'antennes pour un lecteur RFID opérant à des fréquences porteuses distinctes.

Il est connu des systèmes de paiement de service dans lesquels l'identification de l'utilisateur désirant procéder au paiement du service est nécessaire pour permettre la détermination du prix du service et, ainsi, pouvoir procéder au paiement éventuel. C'est le cas, notamment, des systèmes de contrôle d'accès aux zones réservées, en particulier des systèmes de contrôle d'accès aux parkings.

Ces systèmes de paiement intègrent le plus souvent un système de communication comprenant deux dispositifs de communication pour lire chacun des données sur un média sans contact. Par exemple, un premier dispositif de communication est configuré pour lire des données sur un support d'identification sans contact afin d'identifier l'utilisateur, alors que le deuxième dispositif de communication est configuré pour lire des données sur un support de paiement afin de régler un paiement pour l'utilisateur identifié. Dans certains cas, le même média sans contact peut servir à la fois de support d'identification et de support de paiement.

Chaque dispositif de communication comprend une antenne (ou boucle) générant un champ électromagnétique pour permettre la communication entre le dispositif de communication et le média sans contact respectif lorsque ledit média sans contact est placé dans une région, qualifiée de « région de communication » où le champ électromagnétique présente une intensité suffisante. Afin d'empêcher des interférences électromagnétiques entre le champ électromagnétique du premier dispositif de communication et le champ électromagnétique du deuxième dispositif de communication, les antennes sont physiquement espacées l'une de l'autre, de manière à éviter tout chevauchement des régions de communication.

Pour pouvoir s'identifier et éventuellement procéder au paiement du service, ceci en entrée et/ou en sortie du service selon les cas, chaque utilisateur doit ainsi présenter successivement le support d'identification dans la première région de communication associée au premier dispositif de communication, puis le support de paiement sans contact dans la deuxième région de communication associée au deuxième dispositif.

Cependant, un tel système de communication est compliqué à utiliser et n'est pas entièrement satisfaisant en termes d'ergonomie d'utilisation. En effet, les utilisateurs rencontrent souvent des difficultés pour identifier correctement la région de communication dans laquelle placer le média sans contact en fonction des données à lire.

L'invention a ainsi pour but d'améliorer l'ergonomie des systèmes employant deux dispositifs de communication sans contact.

A cet effet, l'invention a pour objet un ensemble comprenant un système de communication et au moins un média sans contact selon la revendication 1.

Selon des modes de réalisation particuliers de l'invention, l'ensemble présente également une ou plusieurs des caractéristiques selon les revendications 2 à 5.

L'invention a également pour objet un système de fourniture de service selon la revendication 6.

Selon des modes de réalisation particuliers de l'invention, le système de fourniture de service présente également une ou plusieurs des caractéristiques selon les revendications 7 à 9.

L'invention a également pour objet un procédé de communication selon la revendication 10.

Selon des modes de réalisation particuliers de l'invention, le procédé de communication présente également une ou plusieurs des caractéristiques selon les revendications 11 à 12.

D'autres caractéristiques et avantages de l'invention apparaîtront à la lecture de la description détaillée qui va suivre, donnée uniquement à titre d'exemple et faite en se référant aux dessins annexés, parmi lesquels :
- la figure 1 est une représentation schématique d'un système de fourniture de service selon un premier exemple de réalisation de l'invention ;
- la figure 2 est une représentation schématique d'un système de communication du système de fourniture de service de la figure 1 ;
- la figure 3 est un organigramme d'un procédé de communication mis en oeuvre par le système de communication de la figure 2 ;
- la figure 4 est une courbe temporelle de champs électromagnétiques du système de communication de la figure 2 ;
- la figure 5 est une représentation schématique d'un système de fourniture de service selon un deuxième exemple de réalisation de l'invention ;
- la figure 6 est une représentation schématique d'un système de fourniture de service selon un troisième exemple de réalisation de l'invention.

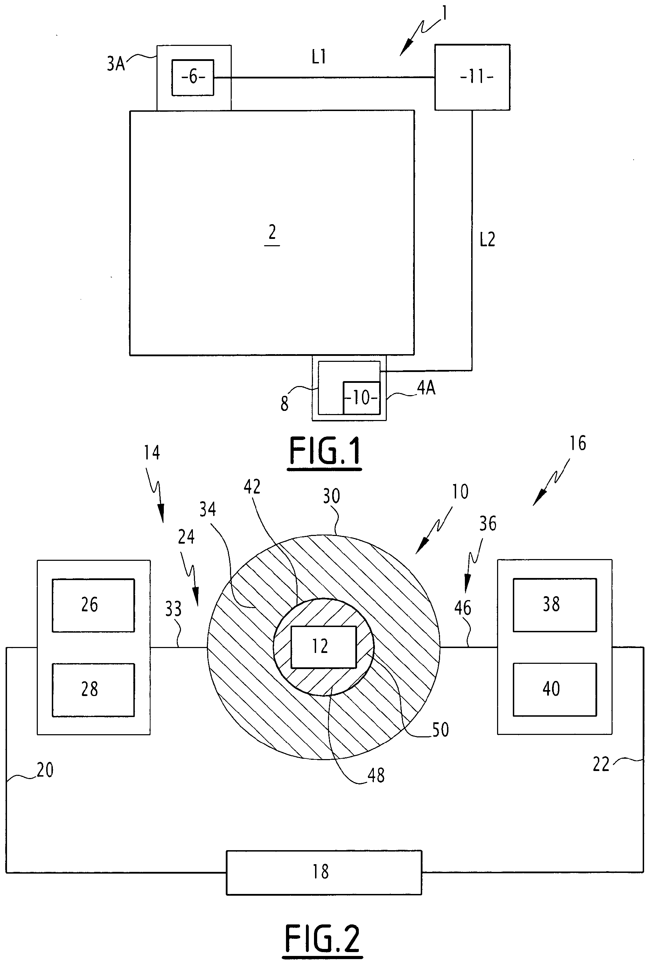

Le système de fourniture de service 1, représenté sur la figure 1, est destiné à fournir un service nécessitant l'identification d'un utilisateur du service. Par exemple, ce système de fourniture de service 1 est, comme représenté, constitué par un système de contrôle d'accès à une zone réservée 2, pour lequel l'identification des utilisateurs pour pouvoir déterminer s'ils disposent d'un droit d'accès pour entrer et/ou sortir de la zone réservée 2 et, le cas échéant, pour pouvoir déterminer le montant dont l'utilisateur doit s'acquitter pour pouvoir bénéficier de ce droit d'accès. La zone réservée 2 est typiquement un parking. En variante, la zone réservée 2 est un réseau routier, par exemple un réseau autoroutier..

Le système de contrôle d'accès 1 comprend ainsi une borne d'entrée 3A, disposée à une entrée de la zone réservée 2, et une borne de sortie 4A disposée à une sortie de la zone réservée 2. La borne d'entrée 3A comprend un identificateur 6 pour relever un identifiant unique (décrit ci-dessous) d'un premier média sans contact 12 (Figure 2), et la borne de sortie 4A comprend un système de paiement de service 8 avec un système de communication 10 pour communiquer avec le premier média sans contact 12 (Figure 2) et, par ce biais, permettre l'identification de l'utilisateur et le paiement du service. L'identificateur 6 est connecté par une liaison de données L1 à un serveur 11 et le système de paiement de service 8 est connecté par une liaison de données L2 au serveur 11.

Le serveur 11 est par exemple un serveur de gestion de la zone réservée 2. Le serveur 11 est alors configuré pour créer et gérer des comptes utilisateurs associés chacun à un identifiant unique (décrit ci-dessous).

Par « média sans contact », on entend un média portant des données transférables par ondes éléctromagnétiques à des systèmes de communication adaptés. En particulier, des données enregistrées sur le premier média sans contact 12 sont lisibles par couplage inductif.

Le premier média sans contact 12 est une carte de paiement sans contact, ou un téléphone mobile apte à la communication en champ proche (CCP ou NFC de l'anglais « Near-field communication »).

Par exemple, le premier média sans contact 12 comprend un circuit intégré (non représenté) comprenant une mémoire et une antenne. De préférence, le premier média sans contact 12 est conforme à la norme ISO 14443 définissant des exigences pour des médias sans contact, telles que caractéristiques physiques du premier média sans contact 12, la puissance de fréquences radioélectriques et un protocole de transmission.

Dans l'exemple représenté sur la figure 2, le système de communication 10 comprend un dispositif de gestion de titre 14, une unité de paiement 16 et un contrôleur externe 18. Le dispositif de gestion de titre 14 est relié au contrôleur externe 18 par une connexion 20 et l'unité de paiement 16 est reliée au contrôleur externe 18 par une connexion 22.

Le dispositif de gestion de titre 14 est propre à identifier le premier média sans contact 12. Par « identifier », on entend l'obtention d'un identifiant unique associé au premier média sans contact 12. L'identifiant unique permet d'identifier sans ambigüité le premier média sans contact 12. Par exemple, dans le cas où le premier média sans contact 12 est une carte de paiement, l'identifiant unique est le numéro de compte primaire (ou PAN de l'anglais « Primary Account Number ») enregistré sur la carte. L'obtention de cet identifiant unique permet l'identification de l'utilisateur en récupérant les données d'un compte utilisateur associé à cet identifiant unique ou la création d'un compte utilisateur lors d'une première obtention de l'identifiant concerné.

Le dispositif de gestion de titre 14 comprend un premier dispositif de communication 24 et une première unité de traitement de données 26. Le premier dispositif de communication 24 est propre à établir une communication avec le premier média sans contact 12. De préférence, le premier dispositif de communication 24 est également propre à établir une communication avec une carte à puce sans contact qui n'est pas nécessairement une carte de paiement, par exemple une carte d'adhérent ou une carte de transport, un badge, ou un ticket de parking sans contact qui est distribué en entrée de la zone réservée 2, par exemple une puce dite « radio-étiquette » selon le principe RFID (de l'anglais « Radio Frequency Identification »).

Le premier dispositif de communication 24 comprend un premier coupleur 28 et une première antenne 30. Dans l'exemple de la figure 1, la première unité de traitement de données 26 et le premier coupleur 28 sont reliés par une connexion 33 à la première antenne 30.

La première unité de traitement de données 26 est formée par exemple d'une mémoire et un processeur associé à la mémoire, non représentés. La première unité de traitement de données 26 est configurée pour traiter des informations reçues de la première antenne 30. Les informations reçues sont par exemple des informations relatives à l'identification du premier média sans contact 12.

Le premier dispositif de communication 24 peut, par exemple, implémenter une pluralité de normes, dont :
- les normes EN 300330-1 et EN 300330-2 ("Compatibilité électromagnétique et spectre radioélectrique (ERM) - Dispositifs à courte portée (SRD) - Équipements radioélectriques dans la bande de fréquences de 9 kHz à 25 MHz et systèmes à boucle d'induction de 9 kHz à 30 MHz - Partie 1 : caractéristiques techniques et méthodes d'essai" et "- Partie 2 : norme européenne (EN) harmonisée couvrant les exigences essentielles de l'article 3, paragraphe 2 de la directive R&TTE") ;
- la norme EN 50364 ("Limitation de l'exposition humaine aux champs électromagnétiques émis par les dispositifs fonctionnant dans la gamme de fréquences de 0 Hz à 300 GHz, utilisés pour la surveillance électronique des objets (EAS), l'identification par radiofréquence (RFID) et les applications similaires") ;
- les normes EN 301489-1 et EN 301489-3 ("Compatibilité électromagnétique et spectre radioélectrique (ERM) - Norme de compatibilité électromagnétique (CEM) concernant les équipements hertziens et services radioélectriques - Partie 1 : exigences techniques communes" et " - Partie 3 : conditions spécifiques pour les dispositifs à courte portée (SRD) fonctionnant sur des fréquences comprises entre 9 kHz et 246 GHz").

Selon l'invention, la première antenne 30 est, par exemple, une antenne-boucle, de préférence réalisée en circuit imprimé. Elle est propre à convertir un signal électrique en champ magnétique haute fréquence (13,56 MHz +/- 7 kHz dans le cas de l'ISO 14443) modulable pour transmettre des informations au média. En sens inverse, la lecture du média s'effectue par modulation de charge. De préférence, la première antenne 30 présente une forme ronde ou une forme de boucle. En variante, la première antenne 30 présente une forme rectangulaire. La première antenne 30 est disposée dans une enveloppe de protection, non représentée.

Pour la première antenne 30, il est défini une première région de communication 34 avec le premier média sans contact 12 telle que, lorsque le premier média sans contact 12 est dans la première région de communication 34, le premier dispositif de communication 24 est apte à communiquer avec le premier média sans contact 12, c'est-à-dire, a minima, à lire des données enregistrées sur le premier média sans contact 12 et, de préférence, à émettre à destination du premier média sans contact 12 des signaux électromagnétiques porteurs d'informations.

La première région de communication 34 présente un volume défini par la première antenne 30. La première région de communication 34 correspond en particulier à un volume dans lequel un champ électromagnétique généré lors d'une lecture de données sur le premier média sans contact 12 par la première antenne 30 présente une puissance supérieure à une valeur seuil. Le volume de la première région de communication 34 est une fonction des caractéristiques de la première antenne 30, du premier média sans contact 12 et du milieu de propagation, c'est-à-dire de l'air entre la première antenne 30 et le premier média sans contact 12.

A titre d'illustration, dans la figure 2, un exemple de la première région de communication 34 est représenté par une hachure. Par exemple, la première région de communication 34 est délimitée extérieurement par la première antenne 30. En outre, la première région de communication 34 est délimitée par une distance de communication entre un point de entre la première antenne 30 et le premier média sans contact 12. Une valeur typique de la distance de communication est 3 cm. Par exemple, la première région de communication 34 présente un volume cylindrique ou en forme de tonnelet.

Le premier coupleur 28 est configuré pour recevoir des signaux électriques provenant de la première antenne 30 et pour les convertir en données interprétables par la première unité de traitement de données 26. A cet effet, le premier coupleur comprend un processeur implémentant les normes communes de communication sans contact, telles que ISO/CEI 14443-2, ISO/CEI 14443-3 et ISO/CEI 14443-4 ("Cartes d'identification - Cartes à circuit(s) intégré(s) sans contact - Cartes de proximité - Partie 2: Interface radiofréquence et des signaux de communication", "- Partie 3 : initialisation et anticollision" et "- Partie 4 : protocole de transmission"), de manière à permettre la détection du premier média sans contact 12, le transfert d'énergie, l'initialisation du dialogue et l'échanges d'informations avec le premier média sans contact 12, via la première antenne 30.

Le premier coupleur 28 est propre, lorsqu'il est activé, à commander la première antenne 30 de sorte à ce qu'elle émette un champ permettant de détecter l'approche d'un média sans contact. Le premier coupleur 28 est également propre, lorsque la présence d'un média sans contact dans la première région de communication 34 a été détecté, à commander la première antenne 30 de sorte à ce qu'elle émette successivement plusieurs signaux électromagnétiques utilisant chacun un protocole de communication propre correspondant à un des protocoles de communication sans contact existants, en d'autres termes, de sorte à ce que la première antenne 30 effectue une scrutation (ou « polling » en anglais), en attendant une réponse du média sans contact détecté. Le premier coupleur 28 est encore propre, lorsqu'a été reçue une réponse du média sans contact, à fixer le dernier protocole utilisé comme protocole de communication avec ledit média sans contact, et à échanger des données avec le média sans contact en utilisant ce protocole de communication.

L'identificateur 6 de la borne d'entrée 3A présente typiquement les mêmes caractéristiques que le dispositif de gestion de titre 14 décrit ci-dessus. Outre ces caractéristiques, le dispositif de gestion de titre 6 présente la caractéristique suivante : sa première unité de traitement de données 26 est apte à communiquer l'identifiant unique associé au premier média sans contact 12 au serveur de gestion 11, ainsi que l'heure et la date de présentation dudit premier média sans contact 12 à la borne d'entrée 3A.

L'unité de paiement 16 est propre à autoriser et à procéder à un paiement au moyen du premier média sans contact 12. Par « paiement », on entend ici les étapes techniques qui sont requises pour effectuer un règlement d'un produit ou service par paiement à l'aide d'un versement sur un compte bancaire. En particulier, on entend par « paiement » la transmission de données techniques, telles que le numéro de compte primaire ou d'autres données techniques ou informatiques, depuis le premier média sans contact 12, via l'unité de paiement 16, jusqu'à un serveur informatique dédié, par exemple dans une banque.

A cette fin, l'unité de paiement 16 respecte les exigences des « spécifications bancaires relatives aux cartes bancaires EMV » (« EMV Contactless Specifications for Payment Systems » en anglais) émises par l'organisme EMVCo, dont notamment les exigences listées dans le livre D, version 2.6, de ces spécifications. Avantageusement, l'unité de paiement 16 respecte également des dispositions de sécurité de paiement telles que la protection de données contre utilisation frauduleuse mises en place par les banques.

L'unité de paiement 16 comprend un deuxième dispositif de communication 36 et une deuxième unité de traitement de données 38. Le deuxième dispositif de communication 36 est propre à établir une communication avec le premier média sans contact 12.

Le deuxième dispositif de communication 36 comprend un deuxième coupleur 40 et une deuxième antenne 42. Dans l'exemple de la figure 1, la deuxième unité de traitement de données 38 et le deuxième coupleur 40 sont reliés par une connexion 46 à la deuxième antenne 42.

La deuxième unité de traitement de données 38 est formée par exemple d'une mémoire et un processeur associé à la mémoire, non représentés. La deuxième unité de traitement de données 38 est configurée pour traiter des informations reçues de la deuxième antenne 42. Les informations reçues sont par exemple des informations relatives au paiement par le premier média sans contact 12, telles que numéro de compte bancaire d'un utilisateur. En complément, l'unité de traitement de données 38 est configurée pour générer des données à envoyer par le deuxième dispositif de communication 36.

La deuxième antenne 42 est, par exemple, une antenne boucle, de préférence réalisée en circuit imprimé. Elle est propre à convertir un signal électrique en champ magnétique haute fréquence (13,56 MHz +/- 7 kHz dans le cas de l'ISO 14443) modulable pour transmettre des informations au média. En sens inverse, la lecture du média s'effectue par modulation de charge. De préférence, la deuxième antenne 42 présente une forme ronde ou une forme de boucle. En variante, la deuxième antenne 42 présente une forme rectangulaire. De préférence, la deuxième antenne 42 est disposée dans un carter de protection (non représenté) avec la deuxième unité de traitement de données 38 et le deuxième coupleur 40.

Pour la deuxième antenne 42, il est défini une région de communication 48 avec le premier média sans contact 12. Lorsque le premier média sans contact 12 est dans la deuxième région de communication 48, la deuxième antenne 42 est apte à communiquer avec le premier média sans contact 12, c'est-à-dire à échanger avec le premier média sans contact 12 des signaux électromagnétiques comprenant des messages relatifs au paiement.

La deuxième région de communication 48 présente un volume défini par la deuxième antenne 42. La deuxième région de communication 48 correspond en particulier à un volume dans lequel un champ électromagnétique généré lors d'une lecture/écriture de données sur le premier média sans contact 12 par la deuxième antenne 42 présente une puissance supérieure à une valeur seuil. Le volume de la deuxième région de communication 48 est une fonction des caractéristiques de la deuxième antenne 42, du premier média sans contact 12 et du milieu de propagation, c'est-à-dire de l'air entre la deuxième antenne 42 et le premier média sans contact 12.

A titre d'illustration, dans la figure 2, un exemple de la deuxième région de communication 48 est représenté par une hachure. Par exemple, la deuxième région de communication 48 est délimitée extérieurement par la deuxième antenne 42. En outre, la deuxième région de communication 48 est délimitée par une distance de communication entre un point de entre la deuxième antenne 42 et le premier média sans contact 12. Une valeur typique de la distance de communication est 3 cm. Par exemple, la deuxième région de communication 48 présente un volume cylindrique.

La deuxième région de communication 48 et la première région de communication 34 se chevauchent. Ainsi, les première et deuxième régions de communication 34, 48 comprennent une région de chevauchement 50 appartenant à la fois à la première région de communication 34 et à la deuxième région de communication 48.

Dans l'exemple de la figure 2, la première antenne 30 et la deuxième antenne 42 sont disposées concentriquement l'une par rapport à l'autre. En d'autres termes, la première antenne 30 et la deuxième antenne 42 comprennent le même centre. Plus précisément, la première antenne 30 est disposée concentriquement autour de la deuxième antenne 42. La deuxième région de communication 48 est alors entièrement comprise dans la première région de communication 34, c'est-à-dire que la deuxième région de communication 48 constitue une partie de la première région de communication 34. La région de chevauchement 50 est alors confondue avec la deuxième région de communication 48.

En variante, non représentée, la première antenne 30 est disposée à côté de la deuxième antenne 42. Les première et deuxième régions de communication 34, 48, définies par le champ électromagnétique de la première et deuxième antenne 30, 42 respectivement, se chevauchent, dans cette variante non représentée, uniquement dans une fraction du volume de la première région de communication 34 et de la deuxième région de communication 48. En d'autres termes, uniquement une partie de la deuxième région de communication 48 est comprise dans la première région de communication 34. La région de chevauchement 50 est alors constituée par ladite partie de la deuxième région de communication 48 comprise dans la première région de communication 34.

Avantageusement, le système de communication 10 comprend une zone de présentation du premier média sans contact 12, matérialisée sur une surface (non représentée) du système de communication 10 visible par l'utilisateur, ladite zone de présentation correspondant à l'intersection de la zone de chevauchement 50 avec ladite surface visible.

Le deuxième coupleur 40 est configuré pour recevoir des signaux électriques provenant de la deuxième antenne 42 et pour les convertir en données interprétables par la deuxième unité de traitement de données 38. A cet effet, le deuxième coupleur 40 comprend un processeur implémentant les normes communes de communication sans contact, telles que ISO/CEI 14443-2, ISO/CEI 14443-3 et ISO/CEI 14443-4 ("Cartes d'identification - Cartes à circuit(s) intégré(s) sans contact - Cartes de proximité - Partie 2: Interface radiofréquence et des signaux de communication", "- Partie 3 : initialisation et anticollision" et "- Partie 4 : protocole de transmission"), de manière à permettre, la sélection et décodage des ondes radioélectriques captées par la deuxième antenne 42.

Optionnellement, le deuxième coupleur est également configuré pour mettre à jour sur le premier média sans contact 12 des informations concernant le paiement. Optionnellement encore, le deuxième coupleur 40 est configuré pour chiffrer ou déchiffrer les messages d'une communication avec le premier média sans contact 12.

Le deuxième coupleur 40 est propre, lorsqu'il est activé et que la présence d'un premier média sans contact 12 dans la deuxième région de communication 48 a été détecté, à commander la deuxième antenne 42 de sorte à ce qu'elle émette successivement plusieurs signaux électromagnétiques utilisant chacun un protocole de communication propre correspondant à un des protocoles de communication sans contact existants, en d'autres termes, de sorte à ce que la deuxième antenne 42 effectue une scrutation (ou « polling » en anglais), en attendant une réponse du média sans contact détecté. Le deuxième coupleur 40 est également propre, lorsqu'a été reçue une réponse du média sans contact, à fixer le dernier protocole utilisé comme protocole de communication avec ledit média sans contact, et à échanger des données avec le média sans contact en utilisant ce protocole de communication.

Le contrôleur externe 18 du système de communication 10 de données est configuré pour activer sélectivement le premier et le deuxième dispositif de communication 24, 36.

Par « activer », on entend envoyer au premier dispositif de communication 24, respectivement au deuxième dispositif de communication 36, une instruction d'activation telle que, à la réception de cette instruction, ledit dispositif de communication 24, 36 émette un champ électromagnétique de communication avec le premier média sans contact 12. En variante, on entend par «activer» le fait de fournir une alimentation électrique au dispositif de communication 24, 36 concerné.

Par « activer sélectivement », on entend que l'instruction d'activation ou l'alimentation électrique est à chaque fois exclusive soit au premier dispositif de communication 24, soit au deuxième dispositif de communication 36, de sorte que jamais plus d'un des dispositifs de communication 24, 36 ne soit activé à la fois. L'autre dispositif de communication 24, 36, qui n'est alors pas activé, est ainsi incapable de lire des données sur le premier média sans contact 12 et aucun champ électromagnétique n'est généré par l'antenne de ce dispositif de communication 24, 36 non activé.

Le fait d'activer séparément les premier et deuxième dispositifs de communication 24, 36 permet d'éviter des interférences du champ électromagnétique généré par la première antenne 30 avec le champ électromagnétique généré par la deuxième antenne 42.

Le contrôleur externe 18 est distinct du premier dispositif de communication 24 et du deuxième dispositif de communication 36. En outre, le contrôleur externe 18 est disposé à l'extérieur par rapport au dispositif de gestion de titre 14 et par rapport à l'unité de paiement 16.

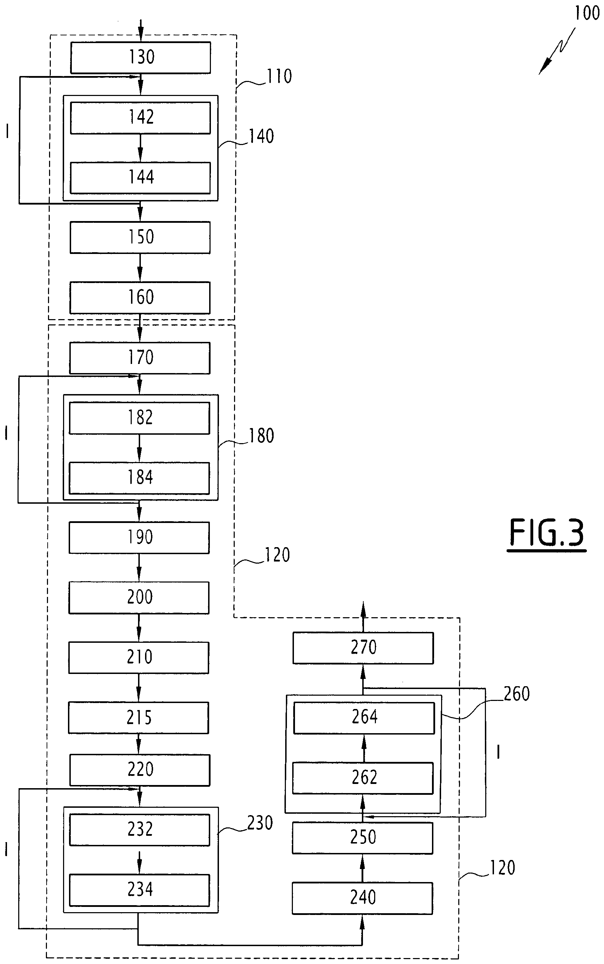

Un procédé 100 de fonctionnement du système de fourniture de service 1 va à présent être décrit, en référence à la figure 3.

Le procédé 100 comprend une première phase 110 de gestion d'une entrée dans la zone réservée 2, suivie d'une phase 120 de gestion d'une sortie hors de la zone réservée 2.

La phase 110 comprend une étape 130 d'activation de l'identificateur 6, suivie d'une étape 140 d'identification, puis d'une étape 150 de création d'un compte utilisateur, avant finalement une étape 160 d'autorisation d'accès.

Au cours de l'étape d'activation 130, un utilisateur souhaitant accéder au parking 2 présente un premier média sans contact 12 à la borne d'entrée 3A. Plus précisément, l'utilisateur présente le premier média sans contact 12 dans la première région de communication 34 de l'identificateur 6 de la borne d'entrée 3A. Un détecteur de présence (non représenté) détecte la présence du premier média sans contact 12 et active l'identificateur 6.

L'étape 140 d'identification comprend une sous-étape 142 d'attente active de détection du premier média sans contact 12, suivie d'une sous-étape 144 de transmission de données d'utilisateur.

Lors de la sous-étape 142 d'attente active, la première antenne 30 émet successivement plusieurs signaux électromagnétiques utilisant chacun un protocole de communication propre correspondant à un des protocoles de communication sans contact existants. En d'autres termes, la première antenne 30 effectue une scrutation (ou « polling » en anglais) pour détecter une réponse du premier média sans contact 12. De préférence, la première antenne 30 émet un signal utilisant un protocole de communication mis en oeuvre par les cartes d'abonnement au service avant d'émettre un signal utilisant un protocole de communication mis en oeuvre par les cartes bancaires.

A l'issue de la sous-étape 142 d'attente active, l'identificateur 6 reçoit une réponse du premier média sans contact 12 et fixe le dernier protocole utilisé comme protocole de communication avec le premier média sans contact 12.

Lors de la sous-étape 144 de transmission de données, l'identificateur 6 échange des données avec le premier média sans contact 12 de manière à récupérer des informations d'identification du premier média sans contact 12, par exemple, le PAN.

Lors de cette sous-étape 144, le premier dispositif de communication 24 de l'identificateur 6 établit une communication avec le premier média sans contact 12, en utilisant le protocole de communication fixé à la sous-étape 142 précédente. Puis, lorsqu'un signal électromagnétique est reçu par la première antenne 30, un signal électrique correspondant est produit par la première antenne 30 et transféré par la connexion 33 au premier coupleur 28, lequel premier coupleur 28 sélecte et décode ce signal avant de transférer les données ainsi extraites à l'unité de traitement de données 26. L'unité de traitement de données 26 traite les données reçues et identifie ainsi le premier média sans contact 12. Les données reçues comprennent par exemple l'identifiant unique du premier média sans contact 12.

Optionnellement, l'étape 140 d'identification est mise en en oeuvre plusieurs fois, comme indiqué par la flèche I sur la figure 3. Par exemple, lors d'un échec d'identification, ladite étape 140 est répétée.

Lors de l'étape 150 de création d'un compte utilisateur, au moins certaines des données reçues sont transférées par la liaison de données L1 au serveur 11. Le serveur 11 crée alors un compte utilisateur associé aux données reçues, c'est-à-dire, typiquement à l'identifiant unique du premier média sans contact 12, puis il enregistre ledit compte dans une mémoire du serveur 11.

Enfin, lors de l'étape 160 d'autorisation d'accès, l'accès à la zone réservée 2 est autorisé. A cet effet, une barrière d'entrée (non représentée) s'ouvre. L'utilisateur peut alors faire entrer son véhicule dans le parking. Le serveur 11 enregistre la date et l'heure d'entrée de l'utilisateur dans le parking dans le compte utilisateur.

Lors de la sortie du véhicule du parking, le véhicule est déplacé jusqu'à la borne de sortie 4A. C'est alors que la phase de gestion de sortie 120 débute.

La phase 120 comprend une première étape 170 d'activation, suivie d'une étape 180 d'identification, avant une étape 190 de recherche du compte utilisateur associé, puis une étape 200 de détermination d'un temps passé dans la zone réservée 2, une étape 210 de calcul d'un montant du paiement, une première étape de signalisation 215, une deuxième étape 220 d'activation, une étape 230 de paiement, une deuxième étape de signalisation 240, une troisième étape 250 d'activation, une étape 260 d'acquittement du paiement, et finalement une étape 270 d'autorisation de sortie.

Lors de la première étape 170 d'activation, la borne de sortie 4A détecte la présence du véhicule. Un message est transmis au contrôleur externe 18, qui en réponse active le dispositif de gestion de titre 14. L'étape d'identification 180 peut alors débuter.

L'étape d'identification 180 présente typiquement les mêmes caractéristiques que l'étape 140 d'identification décrite ci-dessus. De ce fait, l'étape d'identification 180 comprend une sous-étape 182 correspondant à la sous-étape 142 d'attente active de détection du premier média sans contact 12, et sous-étape 184 suivante, correspondant à la sous-étape 144 de transmission de données d'utilisateur.

Lors de l'étape 190 de recherche du compte utilisateur associé, l'identifiant unique est transmis par la liaison de données L2 au serveur 11, qui recherche le compte utilisateur associé à l'identifiant unique enregistré dans le mémoire du serveur 11. A partir de la date de l'heure d'entrée dans la zone réservée 2, enregistré dans le compte utilisateur, et de la date de l'heure actuelle, le serveur 11 détermine, lors de l'étape 200, un temps passé dans la zone réservée 2. En fonction du temps passé dans la zone réservée 2 et des tarifs de stationnement applicables, le serveur 11 détermine finalement, lors de l'étape 210, le montant d'un paiement à effectuer par l'utilisateur.

Lors de la première étape de signalisation 215, le contrôleur externe 18 est informé de l'exécution de la première étape de communication 180. Plus précisément, le dispositif de gestion de titre 14 envoie un message au contrôleur externe 18, ledit message signalant au contrôleur externe 18 que la première étape de communication 180 est achevée. Le contrôleur externe 18 désactive alors le dispositif de gestion de titre 14.

Lors de la deuxième étape 220 d'activation, le contrôleur externe 18 active l'unité de paiement 16. L'étape de paiement 230 peut alors débuter.

L'étape de paiement 230 comprend une sous-étape 232 d'attente active de détection du premier média sans contact 12 et une sous-étape 234 de transmission de données d'utilisateur.

Lors de la sous-étape 232 d'attente active, la deuxième antenne 42 émet successivement plusieurs signaux électromagnétiques utilisant chacun un protocole de communication propre correspondant à un des protocoles de communication sans contact existants. En d'autres termes, la deuxième antenne 42 effectue une scrutation (ou « polling » en anglais) pour détecter une réponse du premier média sans contact 12. De préférence, la deuxième antenne 42 émet un signal utilisant un protocole de communication mis en oeuvre par les cartes bancaires. En d'autres termes, la deuxième antenne 42 émet un signal utilisant un protocole de communication qui permet un paiement sans contact selon les règles citées ci-dessus A l'issue de la sous-étape d'attente active 232, l'unité de paiement 16 reçoit une réponse du premier média sans contact 12 et fixe le dernier protocole utilisé comme protocole de communication avec le premier média sans contact 12.

Lors de la sous-étape de transmission de données 234, l'unité de paiement 16 échange des données avec le premier média sans contact 12 de manière à récupérer des informations relatives à un paiement par le premier média sans contact 12, par exemple, le PAN.

Lors de cette sous-étape 234, le deuxième dispositif de communication 36 de l'unité de paiement 16 établit une communication avec le premier média sans contact 12, en utilisant le protocole de communication fixé à la sous-étape 232 précédente. La communication comprend des données reçues du premier média sans contact 12 et des données envoyées au premier média sans contact 12. Lorsqu'un signal électromagnétique est reçu par la deuxième antenne 42, un signal électrique correspondant est produit par la deuxième antenne 42 et transféré par la connexion 46 au deuxième coupleur 40. Le deuxième coupleur 40 sélecte et décode ce signal avant de transférer les données ainsi extraites à l'unité de traitement de données 38.

Lors d'une transmission de données au premier média sans contact 12, des données sont, à partir de l'unité de traitement de données 38, transférées au deuxième coupleur 28 qui encode des données en signaux. Les signaux sont, sous forme d'une modulation du champ magnétique haute fréquence, émis par la deuxième antenne 42 vers le premier média sans contact 12. Ces signaux sont typiquement utilisés par le premier média sans contact 12 pour faire évoluer ses propres données techniques correspondant par exemple au nombre de paiements effectués par le premier média sans contact 12, au montant de paiements effectués par le premier média sans contact 12, au plafonds de paiement, aux règles qui vont conditionner la nécessité d'une connexion par exemple par internet avec une banque ou aux règles qui définissent la possibilité de faire un paiement sans connexion avec la banque.

A l'issue de l'étape 230 de paiement, des données techniques ont été échangées entre l'unité de paiement 16 et le premier média sans contact 12, et un paiement a été effectué.

Optionnellement, l'étape 230 de paiement est mise en en oeuvre plusieurs fois, comme indiqué par le symbole I sur la figure 3. Par exemple, lors d'un refus du paiement dans l'étape 230 de paiement, ladite étape 230 est répétée.

Lors de la deuxième étape de signalisation 240, le contrôleur externe 18 est informé de l'exécution de l'étape de paiement 230. Plus précisément, l'unité de paiement 16 envoie un message au contrôleur externe 18, ledit message signalant au contrôleur externe 18 que l'étape de paiement 230 est achevée. Le contrôleur externe 18 désactive alors l'unité de paiement 16.

Ensuite, lors de la troisième étape d'activation 250, le contrôleur externe 18 réactive le dispositif de gestion de titre 14. L'étape d'acquittement 260 peut alors débuter.

L'étape d'acquittement 260 comprend une sous-étape 262 d'attente active de détection du premier média sans contact 12, suivie d'une sous-étape 264 de transmission de données d'utilisateur. La sous-étape 262 d'attente active de détection présente typiquement les mêmes caractéristiques que la sous-étape 142 d'attente active de détection décrite ci-dessus. Lors de la sous-étape 264 un marquage sur le média sans contact 12 est enregistré, qui confirme le paiement effectué lors de l'étape de paiement 230.

Optionnellement, l'étape d'acquittement 260 est mise en en oeuvre plusieurs fois, comme indiqué par le symbole I sur la figure 3. Par exemple, lors d'un échec d'acquittement, ladite étape 260 est répétée.

Lors de l'étape 270 d'autorisation de sortie, la sortie de la zone réservée 2 est autorisée. Typiquement, une barrière de sortie du parking (non représentée) s'ouvre. Le véhicule de l'utilisateur peut alors quitter le parking.

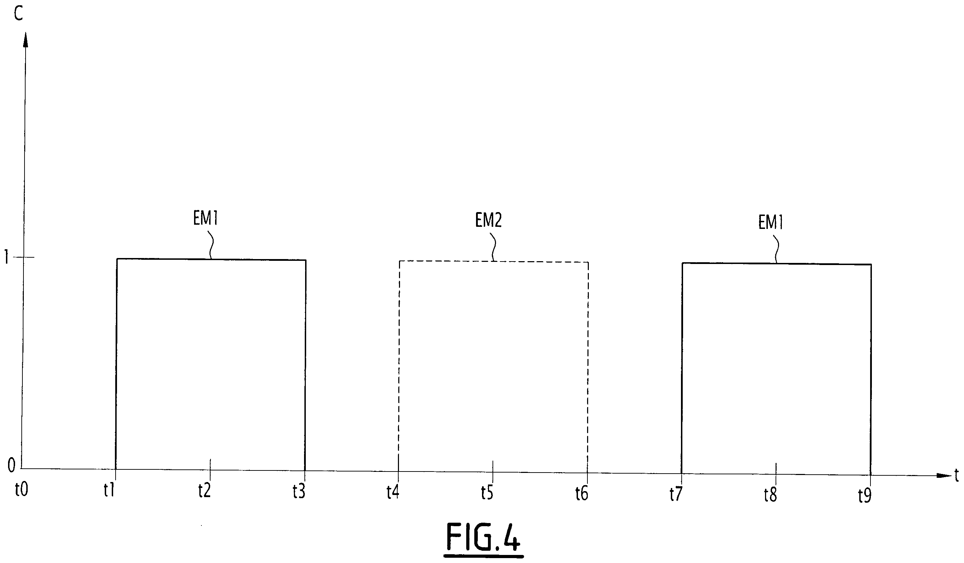

A titre d'exemple, une mise en oeuvre du système de communication 10 est décrite ci-après, en référence à la figure 4 représentant une courbe temporelle de champs électromagnétiques.

L'axe des ordonnées de la figure 4 représente l'intensité C d'un champ électromagnétique pendant une période de temps t. Si l'intensité C a la valeur 1, le champ magnétique est généré, et si l'intensité C a la valeur 0, le champ magnétique n'est pas généré. Dans l'exemple de la figure 4, l'intensité C de deux champs électromagnétiques au cours du temps est représentée. Par une ligne continue, l'intensité C d'un premier champ électromagnétique EM1 généré par la première antenne 30 du dispositif de gestion de titre 14 est représentée, et par une ligne discontinue, l'intensité C d'un deuxième champ électromagnétique EM2 généré par la deuxième antenne 42 de l'unité de paiement est représentée.

A l'instant t0, aucun champ électromagnétique n'est généré.

Au cours d'une première période, correspondant à la l'étape d'identification 180, comprise entre les instants t1 et t3, le premier champ électromagnétique EM1 est généré et comporte donc la valeur C=1. Entre l'instant t1 et t2, la sous-étape 182 d'attente active est effectuée et entre l'instant t2 et t3, la sous-étape 184 de transmission est effectuée.

Entre les instants t3 et t4, aucun champ électromagnétique n'est généré. Cette période, optionnelle, permet, par exemple, d'éviter une interférence entre le premier champ électromagnétique EM1 et le deuxième champ électromagnétique EM2.

Au cours d'une deuxième période, correspondant à l'étape de paiement 230, comprise entre les instants t4 et t6, le deuxième champ électromagnétique EM2 est généré et comporte donc la valeur C=1. Entre l'instant t4 et t5, la sous-étape 232 d'attente active est effectuée et entre l'instant t5 et t6, la sous-étape 234 de transmission est effectuée.

Entre les instants t6 et t7, à nouveau, aucun champ électromagnétique n'est généré, tout comme entre les instants t3 et t4. Cette période est, là encore, optionnelle.

Finalement, entre les instants t7 et t9, le premier champ électromagnétique EM1 est à nouveau généré. Cette période correspond à l'étape 260 d'acquittement du paiement avec, entre les instants t7 et t8, la sous-étape 262 d'attente active et, entre les instants t8 et t9, la sous-étape 264 de transmission. De préférence, la durée de la période entre t0 et t9 est inférieure à 1 s. Par exemple, la durée est 0.8 s.

Grâce à l'invention décrite ci-dessus, il est possible pour un utilisateur d'effectuer à la fois l'identification et le paiement en un seul geste.

En effet, en disposant le premier média sans contact 12 dans la deuxième région de communication 48, laquelle est comprise dans la première région de communication 34, le système de communication 10 pourra effectuer à la fois l'identification et le paiement sans que l'utilisateur ait à déplacer le premier média sans contact 12. L'utilisateur effectuera ainsi une seule et unique action pour la mise en oeuvre de l'ensemble du procédé décrit, à savoir présenter le premier média sans contact 12 dans la deuxième région de communication 48. Ceci permet de simplifier l'ergonomie de l'utilisation du système de communication 10. En outre, l'utilisation est plus facile à comprendre par l'utilisateur.

Par ailleurs, l'invention permet d'éviter d'avoir à distribuer des tickets papier à l'entrée dans la zone réservée puisque c'est directement un support déjà possédé par l'utilisateur qui sert de jeton d'identification. Cela diminue les risques de perte ou de détérioration du ticket et réduit la consommation de consommables pour l'exploitant du système de contrôle d'accès.

Ainsi, en variante non représentée et non couverte par les revendications, le média sans contact présenté au deuxième dispositif de communication 36 est constitué par un deuxième média sans contact différent du premier média sans contact. Si le deuxième média sans contact doit, dans cette variante, être constitué par une carte de paiement ou un téléphone mobile apte à la communication en champ proche (CCP ou NFC de l'anglais « Near-field communication »), le premier média sans contact peut ici être constitué par une carte à puce sans contact qui n'est pas nécessairement une carte de paiement, par exemple une carte d'adhérent ou une carte de transport, un badge, ou un ticket de parking sans contact qui est distribué en entrée de la zone réservée 2, par exemple une puce dite « radio-étiquette » selon le principe RFID (de l'anglais « Radio Frequency Identification »).

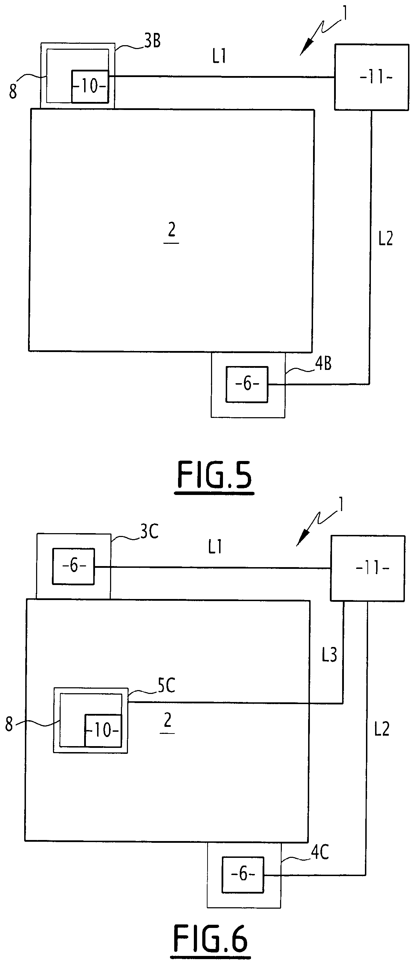

Selon une autre variante de l'invention, représentée sur la figure 5, le système de paiement de service 8, au lieu d'être intégré dans une borne de sortie, est intégré dans une borne d'entrée 3B du système de contrôle d'accès 1. Cette variante est particulièrement adaptée aux cas où la zone réservée 2 est par exemple un réseau de transport public, un cinéma, une piscine, un parc d'attractions, un parc zoologique, un musée, un monument, un site historique ou un parking à prix forfaitaire. De préférence, le système de contrôle d'accès 1 comprend, dans cette variante, une borne de sortie 4B de la zone réservée 2 équipée de l'identificateur 6.

Selon encore une autre variante du système de fourniture de service 1, représentée sur la figure 6, le système de paiement de service 8 n'est intégré ni dans une borne d'entrée ni dans une borne de sortie du système de contrôle d'accès 1, mais dans un équipement séparé 5C connecté par une liaison de données L3 au serveur 11. De préférence, le système de contrôle d'accès 1 comprend, dans cette variante, une borne d'entrée 3C et une borne de sortie 4C chacune équipée de l'identificateur 6.

On notera que, bien que l'invention ait été décrite dans le contexte particulier des systèmes de contrôle d'accès, elle peut être appliquée à d'autres contextes. Par exemple, le système de paiement de service 8 peut être une borne de commande et de paiement de service, typiquement dans un restaurant à restauration rapide. Dans ce cas, le dispositif de gestion de titre 14 pourra être apte à inscrire dans une mémoire du premier média sans contact 12, après l'étape de paiement 110, un ou des titre(s) donnant droit au(x) service(s) acheté(s).

## Revendications

1. Ensemble comprenant un système de communication (10) et au moins un média sans contact (12), le système de communication (10) comprenant un premier dispositif de communication (24) adapté pour lire des données sur le média sans contact (12) et un deuxième dispositif de communication (36) adapté pour lire des données sur le média sans contact (12), le premier dispositif de communication (24) comprenant un premier coupleur (28) et une première antenne (30) définissant une première région de communication (34) avec le média sans contact (12) telle que, lorsque le média sans contact (12) est placé dans la première région de communication (34), le premier dispositif de communication (24) puisse établir une communication avec le média sans contact (12), et le deuxième dispositif de communication (36) comprenant un deuxième coupleur (40) et une deuxième antenne (42) définissant une deuxième région de communication (48) avec le média sans contact (12) telle que, lorsque le média sans contact (12) est placé dans la deuxième région de communication (48), le deuxième dispositif de communication (36) puisse établir une communication avec le média sans contact (12), les première et deuxième régions de communication (34, 48) se chevauchant l'une l'autre,
le système de communication (10) comprend un contrôleur externe (18), distinct des premier et deuxième dispositifs de communication (24, 36), configuré pour activer sélectivement le premier et le deuxième dispositif de communication (24, 36), **caractérisé en ce que** chacune des première et deuxième antennes (30, 42) est propre à convertir un signal électrique en champ magnétique haute fréquence modulable pour transmettre des informations au média sans contact (12),
et **en ce que** le média sans contact (12) est constitué par une carte de paiement sans contact ou un téléphone mobile apte à la communication en champ proche et le deuxième dispositif de communication (36) appartient à une unité de paiement sans contact.

2. Ensemble selon la revendication 1, dans lequel la première antenne (30) est disposée concentriquement autour de la deuxième antenne (42).

3. Ensemble selon la revendication 1 ou 2, dans lequel la deuxième région de communication (48) est incluse dans la première région de communication (34).

4. Ensemble selon l'une quelconque des revendications 1 à 3, dans lequel le deuxième dispositif de communication (36) est, en outre, configuré pour écrire des données sur le média sans contact (12).

5. Ensemble selon l'une quelconque des revendications 1 à 4, dans lequel le premier dispositif de communication (24) est configuré pour obtenir un identifiant unique du média sans contact (12).

6. Système de fourniture de service (1) comprenant l'ensemble selon l'une quelconque des revendications 1 à 5.

7. Système de fourniture de service (1) selon la revendication 6, dans lequel le système de fourniture de service (1) est constitué par un système de contrôle d'accès à une zone réservée (2), le système de contrôle d'accès comprenant au moins une borne d'entrée (3A) disposée à une entrée de la zone réservée (2) et au moins une borne de sortie (4A) disposée à une sortie de la zone réservée (2),
la borne d'entrée (3A) comprenant un identificateur (6) pour relever un identifiant unique du média sans contact (12), et la borne de sortie (4A) comprenant le système de communication (10).

8. Système de fourniture de service (1) selon la revendication 6, dans lequel le système de fourniture de service (1) est constitué par un système de contrôle d'accès à une zone réservée (2), le système de contrôle d'accès comprenant au moins une borne d'entrée (3B) disposée à une entrée de la zone réservée (2) et au moins une borne de sortie (4B) disposée à une sortie de la zone réservée (2),
la borne d'entrée (3B) comprenant le système de communication (10), et la borne de sortie (4B) comprenant un identificateur (6) pour relever un identifiant unique du média sans contact (12).

9. Système de fourniture de service (1) selon la revendication 6, dans lequel le système de fourniture de service (1) est constitué par un système de contrôle d'accès à une zone réservée (2), le système de contrôle d'accès comprenant au moins une borne d'entrée (3C) disposée à une entrée de la zone réservée (2), au moins une borne de sortie (4C) disposée à une sortie de la zone réservée (2) et au moins un équipement séparé (5C), distinct de la borne d'entrée (3C) et de la borne de sortie (4C),
la borne d'entrée (3C) comprenant un identificateur (6) pour relever un identifiant unique du média sans contact (12), la borne de sortie (4C) comprenant également un identificateur (6) pour relever un identifiant unique du média sans contact (12), et l'équipement séparé (5C) comprenant le système de communication (10).

10. Procédé (120) de communication avec au moins un média sans contact (12) comprenant un circuit intégré comprenant une mémoire et une antenne de média sans contact, le procédé (120) comprenant:
une étape de présentation du média sans contact (12),
une première étape (180) de communication avec le média sans contact (12), la première étape de communication (180) étant mise en oeuvre par un premier dispositif de communication (24) comprenant un premier coupleur (28) et une première antenne (30) définissant une première région de communication (34) avec le média sans contact (12) telle que, lorsque le média sans contact (12) est placé dans la première région de communication (34), le premier dispositif de communication (24) puisse établir une communication avec le média sans contact (12), et
une deuxième étape (230) de communication avec le média sans contact (12), la deuxième étape de communication (230) étant mise en oeuvre par un deuxième dispositif de communication (36) comprenant un deuxième coupleur (40) et une deuxième antenne (42) définissant une deuxième région de communication (48) avec le média sans contact (12) telle que, lorsque le média sans contact (12) est placé dans la deuxième région de communication (48), le deuxième dispositif de communication (36) puisse établir une communication avec le média sans contact (12), les première et deuxième régions de communication (34, 48) présentant une région de chevauchement (50) appartenant à la fois à la première région de communication (34) et à la deuxième région de communication (48),
la première étape de communication (180) et la deuxième étape de communication (230) sont déclenchées par un contrôleur externe (18), distinct des premier et deuxième dispositifs de communication (24, 36), le contrôleur externe (18) activant successivement le premier dispositif de communication (24) puis le deuxième dispositif de communication (36),
**caractérisé en ce que** chacune des première et deuxième antennes (30, 42) est propre à convertir un signal électrique en champ magnétique haute fréquence modulable pour transmettre des informations au média sans contact (12),
et **en ce que** le média sans contact (12) est constitué par une carte de paiement sans contact ou un téléphone mobile apte à la communication en champ proche et le deuxième dispositif de communication (36) appartient à une unité de paiement sans contact.

11. Procédé (120) selon la revendication 10 comprenant une étape de signalisation (215), lors de laquelle le contrôleur externe (18) est informé de l'exécution de la première étape de communication (180), suivie d'une étape d'activation (220), lors de laquelle le contrôleur externe (18) active le deuxième dispositif de communication (36) pour l'exécution de la deuxième étape de communication (230).

12. Procédé (120) selon la revendication 10 ou 11, dans lequel, lors de l'étape de présentation, le média sans contact (12) est disposé dans la région de chevauchement (50), le média sans contact (12) restant dans cette région de chevauchement (50) au cours des première et deuxième phases de communication.

## Patentansprüche

1. Anordnung aufweisend ein Kommunikationssystem (10) und mindestens ein kontaktloses Medium (12), wobei das Kommunikationssystem (10) eine erste Kommunikationsvorrichtung (24), die zum Lesen von Daten auf dem kontaktlosen Medium (12) eingerichtet ist, und eine zweite Kommunikationsvorrichtung (36) aufweist, die zum Lesen von Daten auf dem kontaktlosen Medium eingerichtet ist, wobei die erste Kommunikationsvorrichtung (24) einen ersten Koppler (28) und eine erste Antenne (30) aufweist, die einen ersten Kommunikationsbereich (34) mit dem kontaktlosen Medium (12) definiert, derart, dass, wenn das kontaktlose Medium (12) in dem ersten Kommunikationsbereich (34) platziert ist, die erste Kommunikationsvorrichtung (24) eine Kommunikation mit dem kontaktlosen Medium (12) herstellen kann, und die zweite Kommunikationsvorrichtung (36) einen zweiten Koppler (40) und eine zweite Antenne (42) aufweist, die einen zweiten Kommunikationsbereich (48) mit dem kontaktlosen Medium derart definiert, dass wenn das kontaktlose Medium (12) in dem zweiten Kommunikationsbereich (48) platziert ist, die zweite Kommunikationsvorrichtung (36) eine Kommunikation mit dem kontaktlosen Medium (12) herstellen kann, wobei sich der erste und der zweite Kommunikationsbereich (34, 48) überlappen,
wobei das Kommunikationssystem (10) eine externe Steuerung (18) aufweist, die von der ersten und zweiten Kommunikationsvorrichtung (24, 36) verschieden ist und konfiguriert ist, die erste und zweite Kommunikationsvorrichtung (24, 36) selektiv zu aktivieren,
charakterisiert
dadurch, dass jede der ersten und zweiten Antenne (30, 42) dazu eingerichtet ist, ein elektrisches Signal in ein modulierbares Hochfrequenzmagnetfeld umzuwandeln, um Informationen an das kontaktlose Medium zu übermitteln (12),
und dadurch, dass
das kontaktlose Medium (12) durch eine kontaktlose Bezahlkarte oder ein Mobiltelefon gebildet wird, das zur Nahfeldkommunikation eingerichtet ist, und die zweite Kommunikationsvorrichtung (36) zu einer kontaktlosen Bezahleinheit gehört.

2. Anordnung nach Anspruch 1, wobei die erste Antenne (30) konzentrisch um die zweite Antenne (42) herum angeordnet ist.

3. Anordnung nach Anspruch 1 oder 2, wobei der zweite Kommunikationsbereich (48) in dem ersten Kommunikationsbereich (34) enthalten ist.

4. Anordnung nach einem der Ansprüche 1 bis 3, wobei die zweite Kommunikationsvorrichtung (36) ferner eingerichtet ist, Daten auf das kontaktlose Medium (12) zu schreiben.

5. Anordnung nach einem der Ansprüche 1 bis 4, wobei die erste Kommunikationsvorrichtung (24) eingerichtet ist, eine eindeutige Kennung des kontaktlosen Mediums (12) zu beschaffen.

6. Dienstbereitstellungssystem (1), aufweisend das Kommunikationssystem (10) nach einem der Ansprüche 1 bis 5.

7. Dienstbereitstellungssystem (1) nach Anspruch 6, wobei das Dienstbereitstellungssystem (1) aus einem Zugangskontrollsystem (2) für einen reservierten Bereich gebildet ist, wobei das Zugangskontrollsystem mindestens einen Eingangspfosten (3A), der an einem Eingang des reservierten Bereichs (2) angeordnet ist, und mindestens einen Ausgangspfosten (4A), der an einem Ausgang des reservierten Bereichs (2) angeordnet ist, aufweist,
wobei der Eingangspfosten (3A) einen Identifikator (6) zum Lesen einer eindeutigen Kennung des kontaktlosen Mediums (12) aufweist und der Ausgangspfosten (4A) das Kommunikationssystem (10) aufweist.

8. Dienstbereitstellungssystem (1) nach Anspruch 6, wobei das Dienstbereitstellungssystem (1) aus einem Zugangskontrollsystem (2) für einen reservierten Bereiche gebildet ist, wobei das Zugangskontrollsystem mindestens einen Eingangspfosten (3B), der an einem Eingang des reservierten Bereichs (2) angeordnet ist, und mindestens einen Ausgangspfosten (4B), der an einem Ausgang des reservierten Bereichs (2) angeordnet ist aufweist, wobei der Eingangspfosten (3B) das Kommunikationssystem (10) aufweist und der Ausgangspfosten (4B) einen Identifikator (6) zum Lesen einer eindeutigen Kennung des kontaktlosen Mediums (12) aufweist.

9. Dienstbereitstellungssystem (1) nach Anspruch 6, wobei das Dienstbereitstellungssystem (1) aus einem Zugangskontrollsystem (2) für einen reservierten Bereich gebildet ist, wobei das Zugangskontrollsystem mindestens einen Eingangspfosten (3C), der an einem Eingang des reservierten Bereichs (2) angeordnet ist, und mindestens einen Ausgangspfosten (4C), der an einem Ausgang des reservierten Bereichs (2) angeordnet ist, und mindestens ein separates Gerät (5C) aufweist, das von dem Eingangspfosten (3C) und dem Ausgangspfosten (4C) verschieden ist,
wobei der Eingangspfosten (3C) einen Identifikator (6) zum Lesen einer eindeutigen Kennung des kontaktlosen Mediums (12) aufweist, wobei der Ausgangspfosten (4C) auch einen Identifikator (6) zum Lesen einer eindeutigen Kennung des kontaktlosen Mediums (12) aufweist und das separate Gerät (5C) das Kommunikationssystem (10) aufweist.

10. Verfahren (120) zum Kommunizieren mit mindestens einem kontaktlosen Medium (12), das eine integrierte Schaltung mit einem Speicher und einer Kontaktloses-Medium-Antenne aufweist, wobei das Verfahren (120) aufweist:
einen Schritt des Präsentierens des kontaktlosen Mediums (12),
einen ersten Schritt (180) des Kommunizierens mit dem kontaktlosen Medium (12), wobei der erste Kommunikationsschritt (180) durch eine erste Kommunikationsvorrichtung (24) durchgeführt wird, die einen ersten Koppler (28) und eine erste Antenne (30) aufweist, die einen ersten Kommunikationsbereich (34) mit dem kontaktlosen Medium definiert (12) derart, dass, wenn das kontaktlose Medium (12) in dem ersten Kommunikationsbereich (34) platziert ist, die erste Kommunikationsvorrichtung (24) eine Kommunikation mit dem kontaktlosen Medium (12) herstellen kann, und
einen zweiten Kommunikationsschritt (230) mit dem kontaktlosen Medium, wobei der zweite Kommunikationsschritt (230) durch eine zweite Kommunikationsvorrichtung (36) durchgeführt wird, die einen zweiten Koppler (40) und eine zweite Antenne (42) aufweist, die einen zweiten Kommunikationsbereich (48) mit dem kontaktlosen Medium definiert derart, dass, wenn das kontaktlose Medium in dem zweiten Kommunikationsbereich (48) platziert ist, die zweite Kommunikationsvorrichtung (36) eine Kommunikation mit dem kontaktlosen Medium herstellen kann, wobei der erste und der zweite Kommunikationsbereich (34, 48) einen Überlappungsbereich (50) aufweisen, der sowohl zum ersten Kommunikationsbereich (34) als auch zum zweiten Kommunikationsbereich (48) gehört,
wobei der erste Kommunikationsschritt (180) und der zweite Kommunikationsschritt (230) von einer externen Steuerung (18) ausgelöst werden, die von der ersten und der zweiten Kommunikationsvorrichtung (24, 36) verschieden ist, wobei die externe Steuerung (18) nacheinander die erste Kommunikationsvorrichtung (24) und dann die zweite Kommunikationsvorrichtung (36) aktiviert,
charakterisiert
dadurch, dass jede der ersten und zweiten Antenne (30, 42) dazu eingerichtet ist, ein elektrisches Signal in ein modulierbares Hochfrequenzmagnetfeld umzuwandeln, um Informationen an das kontaktlose Medium zu übermitteln (12),
und dadurch, dass
das kontaktlose Medium (12) durch eine kontaktlose Bezahlkarte oder ein Mobiltelefon gebildet wird, das zur Nahfeldkommunikation eingerichtet ist, und die zweite Kommunikationsvorrichtung (36) zu einer kontaktlosen Bezahleinheit gehört.

11. Verfahren (120) nach Anspruch 10, aufweisend einen Signalisierungsschritt (215), wobei die externe Steuerung (18) über die Ausführung des ersten Kommunikationsschritts (180) informiert wird, gefolgt von einem Aktivierungsschritt (220), bei dem die externe Steuerung (18) die zweite Kommunikationsvorrichtung (36) zum Ausführen des zweiten Kommunikationsschritts (230) aktiviert.

12. Verfahren (120) nach Anspruch 10 oder 11, wobei in dem Präsentationsschritt das kontaktlose Medium (12) in dem Überlappungsbereich (50) angeordnet wird, wobei das kontaktlose Medium (12) in diesem Überlappungsbereich (50) während der ersten und zweiten Kommunikationsphase in diesem Bereich verbleibt.

## Claims

1. Assembly comprising a communication system (10) and at least one contactless medium (12), the communication system (10) comprising a first communication device (24) adapted to read data on the contactless medium (12) and a second communication device (36) adapted to read data on the contactless medium (12), the first communication device (24) comprising a first coupler (28) and a first antenna (30) defining a first communication region (34) with the contactless medium (12) such that, when the contactless medium (12) is placed in the first communication region (34), the first communication device (24) is able to establish communication with the contactless medium (12), and the second communication device (36) comprising a second coupler (40) and a second antenna (42) defining a second communication region (48) with the contactless medium (12) such that, when the contactless medium (12) is placed in the second communication region (48), the second communication device (36) is able to establish communication with the contactless medium (12), the first and second communication regions (34, 48) overlapping,
the communication system (10) comprises an external controller (18), separate from the first and second communication devices (24, 36), configured to selectively activate the first and the second communication device (24, 36),
**characterised in that** each of the first and second antennas (30, 42) is capable of converting an electrical signal into a modulable high-frequency magnetic field in order to transmit information to the contactless medium (12),
and **in that** the contactless medium (12) is constituted by a contactless payment card or a mobile telephone capable of near field communication, and the second communication device (36) belongs to a contactless payment unit.

2. Assembly according to claim 1, wherein the first antenna (30) is arranged concentrically around the second antenna (42).

3. Assembly according to claim 1 or 2, wherein the second communication region (48) is included in the first communication region (34).

4. Assembly according to any one of claims 1 to 3, wherein the second communication device (36) is further configured to write data on the contactless medium (12).

5. Assembly according to any one of claims 1 to 4, wherein the first communication device (24) is configured to obtain a unique identifier of the contactless medium (12).

6. Service providing system (1) comprising the assembly according to any one of claims 1 to 5.

7. Service providing system (1) according to claim 6, wherein the service providing system (1) is constituted by an access control system to a reserved area (2), the access control system comprising at least one entry terminal (3A) arranged at an entry to the reserved area (2) and at least one exit terminal (4A) arranged at an exit from the reserved area (2),
the entry terminal (3A) comprising an identification means (6) for reading a unique identifier of the contactless medium (12), and the exit terminal (4A) comprising the communication system (10).

8. Service providing system (1) according to claim 6, wherein the service providing system (1) is constituted by an access control system to a reserved area (2), the access control system comprising at least one entry terminal (3B) arranged at an entry to the reserved area (2) and at least one exit terminal (4B) arranged at an exit from the reserved area (2),
the entry terminal (3B) comprising the communication system (10), and the exit terminal (4B) comprising an identification means (6) for reading a unique identifier of the contactless medium (12).

9. Service providing system (1) according to claim 6, wherein the service providing system (1) is constituted by an access control system to a reserved area (2), the access control system comprising at least one entry terminal (3C) arranged at an entry to the reserved area (2), at least one exit terminal (4C) arranged at an exit from the reserved area (2), and at least one separate piece of equipment (5C), distinct from the entry terminal (3C) and the exit terminal (4C),
the entry terminal (3C) comprising an identification means (6) for reading a unique identifier of the contactless medium (12), the exit terminal (4C) also comprising an identification means (6) for reading a unique identifier of the contactless medium (12), and the separate piece of equipment (5C) comprising the communication system (10).

10. Method (120) for communicating with at least one contactless medium (12) comprising an integrated circuit comprising a memory and a contactless medium antenna, the method (120) comprising:
a step of presenting the contactless medium (12),
a first step (180) of communication with the contactless medium (12), the first communication step (180) being carried out by a first communication device (24) comprising a first coupler (28) and a first antenna (30) defining a first communication region (34) with the contactless medium (12) such that, when the contactless medium (12) is placed in the first communication region (34), the first communication device (24) is able to establish communication with the contactless medium (12), and
a second step (230) of communication with the contactless medium (12), the second communication step (230) being carried out by a second communication device (36) comprising a second coupler (40) and a second antenna (42) defining a second communication region (48) with the contactless medium (12) such that, when the contactless medium (12) is placed in the second communication region (48), the second communication device (36) is able to establish communication with the contactless medium (12), the first and second communication regions (34, 48) having an overlap region (50) belonging both to the first communication region (34) and to the second communication region (48),
the first communication step (180) and the second communication step (230) are triggered by an external controller (18), separate from the first and second communication devices (24, 36), the external controller (18) activating in succession the first communication device (24) and then the second communication device (36),
**characterised in that** each of the first and second antennas (30, 42) is capable of converting an electrical signal into a modulable high-frequency magnetic field in order to transmit information to the contactless medium (12),
and **in that** the contactless medium (12) is constituted by a contactless payment card or a mobile telephone capable of near field communication, and the second communication device (36) belongs to a contactless payment unit.

11. Method (120) according to claim 10, comprising a signalling step (215), in which the external controller (18) is informed of the execution of the first communication step (180), followed by an activation step (220), in which the external controller (18) activates the second communication device (36) for the execution of the second communication step (230).

12. Method (120) according to claim 10 or 11, wherein, in the presentation step, the contactless medium (12) is disposed in the overlap region (50), the contactless medium (12) remaining in the overlap region (50) during the first and second communication phases.
